# EUROPÄISCHE PATENTSCHRIFT

(11) **EP 1 357 005 B1**
(45) Veröffentlichungstag und Bekanntmachung des Hinweises auf die Patenterteilung: **30.08.2006**
(21) Anmeldenummer: 03006456.2
(22) Anmeldetag: 21.03.2003
(51) Int. Cl.: B60S 1/38, B60S 1/32

(54) **Vorrichtung zum seitlichen Führen eines Wischblatts**
Lateral guiding device for a wiper blade
Dispositif pour le guidage latéral d'un balai d'essuie-glace

(30) Priorität: 23.04.2002 DE 10218034
(43) Veröffentlichungstag der Anmeldung: 29.10.2003
(73) Patentinhaber: ROBERT BOSCH GMBH, 70442 Stuttgart (DE)
(72) Erfinder: Dietrich, Jan, 77815 Buehl (DE); Pichler, Andreas, 76646 Bruchsal (DE)

(56) Entgegenhaltungen:
- WO-A-02/060730
- DE-A- 19 605 428
- DE-A- 19 731 683

## Beschreibung

### Stand der Technik

Die Erfindung geht von einer Vorrichtung zum seitlichen Führen eines Wischblatts nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange aufgebaut ist. Mit dem Wischarm ist ein Wischblatt gelenkig verbunden, das aus einem Tragbügelsystem mit einem Mittelbügel und gegebenenfalls mit untergeordneten Bügeln aufgebaut ist, z.B. einem Zwischenbügel und/oder Krallenbügeln, die eine Wischleiste halten. Die Bügel sind mit den untergeordneten Bügeln ebenfalls gelenkig verbunden, so dass sich die Wischleiste während der Schwenkbewegung einer Wölbung der Fahrzeugscheibe anpassen kann. Solche Scheibenwischer sind z.B. aus der DE 37 44 237 A1 bekannt. Die Gelenke zwischen den Bügeln werden in der Regel durch Kunststoffteile gebildet, die gleichzeitig die Stirnseite des Profils des übergeordneten Bügels abdecken.

Aus der DE 197 38 232 A1 ist ferner ein Tragelement aus einem elastischen, hochfesten Kunststoff für eine Wischleiste bekannt, das im unbelasteten Zustand eine Krümmung aufweist, die so ausgelegt ist, dass sich ein gleichmäßiger Anpressdruck ergibt, wenn sich im Betrieb des Wischblatts die Wischleiste vollständig an die Fahrzeugscheibe anlegt. An den Stirnseiten werden als Abschluss des Profils Kappen aus Kunststoff montiert. Es sind ferner ähnliche Wischblätter mit einem Tragelement aus Federstahl bekannt. Im Folgenden wird unter Wischleistenträger sowohl ein Tragbügelsystem als auch ein Tragelement im oben beschriebenen Sinn verstanden.

Wischblätter neigen während des Wischvorgangs häufig zum Schwingen. Vor allem bei relativ langen Wischblättern ist die Führung am Gelenk zwischen dem Wischblatt und dem Wischarm nicht ausreichend stabil, um diese Schwingungen zu unterbinden. Da ein Wischblatt ein schlankes Bauteil ist, und auf Grund großer Geschwindigkeitsunterschiede zwischen dem antriebsseitigen, inneren Bereich und dem äußeren Bereich des Wischblatts unterschiedliche Reibverhältnisse vorliegen sowie wegen der Stick-Slipeffekte wird das Wischblatt zum Schwingen angeregt. Dies führt insbesondere am Innenkreis des Wischblatts, wo besonders kleine Reibgeschwindigkeiten vorherrschen, zu unerwünschten seitlichen Bewegungen, die ab einer bestimmten Größe dazu führen können, dass das Wischblatt am Wischarm anschlägt und Klappergeräusche verursacht. Dies ist besonders kritisch, wenn die Fahrzeugscheiben trocken, verschmutzt, vereist oder nicht ausreichend feucht sind oder Schnee auf der Fahrzeugscheibe liegt. Da das Wischblatt dabei den Kontakt zur Fahrzeugscheibe kurzfristig verlieren kann, ist außerdem das Wischbild unbefriedigend. Das Wischblatt neigt umso eher zum Rattern, je mehr Bügelteile es aufweist. Ferner verhalten sich leichte Wischblätter mit einer geringen Federsteifigkeit ungünstiger als andere.

Aus der DE 197 31 683 A1 ist ferner eine Einrichtung zum Führen des Wischblatts bekannt, die ein erstes und ein zweites Teil aufweist. Sie ist im Bereich der Anlenkstelle des Krallenbügels angeordnet und mit dem Gelenkteil des Wischarms fest verbunden, z.B. durch Kleben, Schweißen, Löten, Klipsen, Klemmen usw. Das erste Teil der Einrichtung besitzt Führungswangen, welche die Gelenkstelle des Krallenbügels umgreifen und in Bezug auf den Wischarm führen. Auch das zweite Teil weist Führungswangen auf, zwischen denen das erste Teil teleskopartig geführt ist, so dass dessen Führungswangen kurz gehalten werden können und eine Kollision mit der Fahrzeugscheibe auch bei starken Wölbungen der Fahrzeugscheibe nicht zu befürchten ist. Das erste Teil ist zweckmäßigerweise verliersicher mit der Einrichtung verbunden, z.B. durch ein nachgiebiges Element.

Das zweite Teil kann auch aus einer Federzunge bestehen, die das erste Teil mit der Einrichtung in der Weise verbindet, dass das erste Teil in Bewegungsrichtung des Scheibenwischers starr geführt ist, während es senkrecht zur Fahrzeugscheibe gegenüber dem Wischarm nachgeben kann. Es ist natürlich auch möglich, als zweites Teil eine Kombination zwischen einer Federzunge und Führungswangen zu wählen, wobei die Federzunge dann die Funktion des nachgiebigen Elements übernimmt. Ferner kann die Einrichtung aus einzelnen Blechteilen hergestellt und zusammengesetzt sein, bevorzugt ist sie jedoch ein Kunststoffspritzteil aus einem geeigneten Kunststoff. In jedem Fall werden aber zum Führen des Wischblatts zusätzliche Bauteile benötigt, wodurch ein erhöhter Fertigungs- und Montageaufwand und zusätzliche Materialkosten entstehen. Zwischen den Führungsflächen der Einrichtung werden in der Regel Luftspalte vorgesehen, um zu verhindern, dass das Gelenk zwischen Wischblatt und Wischarm durch toleranzbehaftete Wischarmgeometrien, z.B. Kröpfungen der Wischstange, nicht klemmt. Auch hierbei können Klappergeräusche entstehen, weil das seitliche Schwingen zwar stark vermindert, aber nicht vollständig vermieden wird.

### Vorteile der Erfindung

Nach der Erfindung weist die Vorrichtung einen Klipp mit einer Öse auf, der am Wischleistenträger und/oder der Wischleiste zu befestigen ist, und in dessen Öse eine Blattfeder mit einem hakenförmigen Ende greift, während ihr anderes Ende an einem Teil des Wischarms zu befestigen ist. Da sehr viele Wischblätter bereits Klipps aus Kunststoff besitzen, die am Ende auf die Wischleiste bzw. den Wischleistenträger aufgesteckt sind oder ein Gelenk zwischen den Bügeln eines Wischleistenträgers bilden, können diese Klipps gleichzeitig zur seitlichen Führung des Wischblatts benutzt werden, indem sie mit einer entsprechenden Öse versehen werden. In diese greift dann das hakenförmige Ende der Blattfeder ein.

Zweckmäßigerweise dient ein Endklipp des Wischblatts, der einem Befestigungsteil des Wischarms zugewandt ist, zur seitlichen Führung, wobei er in seinem oberen Bereich einen zapfenförmigen Ansatz mit der Öse besitzt, der in Richtung des Befestigungsteils weist. Die Blattfeder wird dabei zweckmäßigerweise im Bereich eines Abklappgelenks am Wischarm befestigt, z.B. am Befestigungsteil, an einem Gelenkteil oder an einem Gelenkbolzen des Abklappgelenks. Je nachdem, ob das Wischblatt seitlich des Gelenkteils oder innerhalb eines u-förmigen Profils des Gelenkteils verläuft, wird die Blattfeder innen bzw. außen am Gelenkteil bzw. Befestigungsteil befestigt. Sie wird selbstverständlich so befestigt, dass sie in einer Richtung senkrecht zu einer Fahrzeugscheibe sehr nachgiebig ist, während sie das Wischblatt parallel zur Fahrzeugscheibe stabil führt. Wird die Blattfeder innerhalb des Profils des Wischarms befestigt, wird der optische Eindruck des Scheibenwischers durch die seitliche Führung nicht beeinträchtigt. Dies ist besonders für bügelfreie Wischblätter vorteilhaft, die sehr niedrig bauen und einen geringen Windwiderstand bieten.

Nach einer Ausgestaltung der Erfindung wird die Blattfeder von einer Federzunge gebildet, die am Gelenkteil angeformt ist. Hierdurch werden die Teilevielfalt und die Montagekosten verringert.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine teilweise Seitenansicht eines Wischarms mit einem Wischblatt,
- Fig. 2: eine vergrößerte Ansicht von oben auf einen Bereich II in Fig. 1 und
- Fig. 3: eine Variante zu Fig. 2.

### Beschreibung der Ausführungsbeispiele

Ein Wischarm 10 besitzt ein Befestigungsteil 12, das über ein Abklappgelenk 16 mit einem Gelenkteil 14 schwenkbar verbunden ist. Zu diesem Zweck besitzt das Abklappgelenk 16 einen Gelenkbolzen 38, der in entsprechenden Lagerbohrungen des Befestigungsteils 12 und des Gelenkteils 14 gelagert ist. An dem Wischarm 10 ist ein Wischblatt 18 angelenkt, das seitlich des Gelenkteils 14 verläuft und einen bügelfreien Wischleistenträger 34 besitzt, an dem eine Wischleiste 32 befestigt ist. Auf das Ende des Wischblatts 18, das dem Befestigungsteil 12 zugewandt ist, ist ein Endklipp 20 auf den Wischleistenträger aufgesteckt. Der Endklipp 20 besitzt einen zapfenförmigen Ansatz 24 mit einer Öse 22, in die eine Blattfeder 26 eingreift. Die Breite der Blattfeder 26 ist deutlich größer als die Höhe, so dass sie in einer Richtung senkrecht zu einer Fahrzeugscheibe sehr nachgiebig ist, während sie das Wischblatt 18 seitlich stabil führt.

Die Blattfeder 26 ist an der Außenseite des Befestigungsteils in der Nähe des Abklappgelenks mittels eines Halters 30 befestigt, z.B. durch Nieten, Schrauben, Löten, Schweißen, Kleben oder dgl. Durch den Abstand zwischen dem Halter 30 und dem hakenförmigen Ende 28 ergibt sich eine weiche, große Nachgiebigkeit senkrecht zur Fahrzeugscheibe, ohne dass die Gefahr besteht, dass Teile der Vorrichtung die Fahrzeugscheibe berühren.

Die Blattfeder 26 kann mit ihrem Ende 36 auch am Befestigungsteil 12 oder am Gelenkbolzen 38 befestigt sein. Die Befestigung am Gelenkbolzen 38 eignet sich vor allem für den Anwendungsfall, wenn das Wischblatt 18 innerhalb eines u-förmigen Profils des Befestigungsteils 12 verläuft. Dabei kann das Ende 36 der Blattfeder 26 um den Gelenkbolzen 38 gewickelt werden und sich an der oberen Deckwand des u-förmigen Profils abstützen.

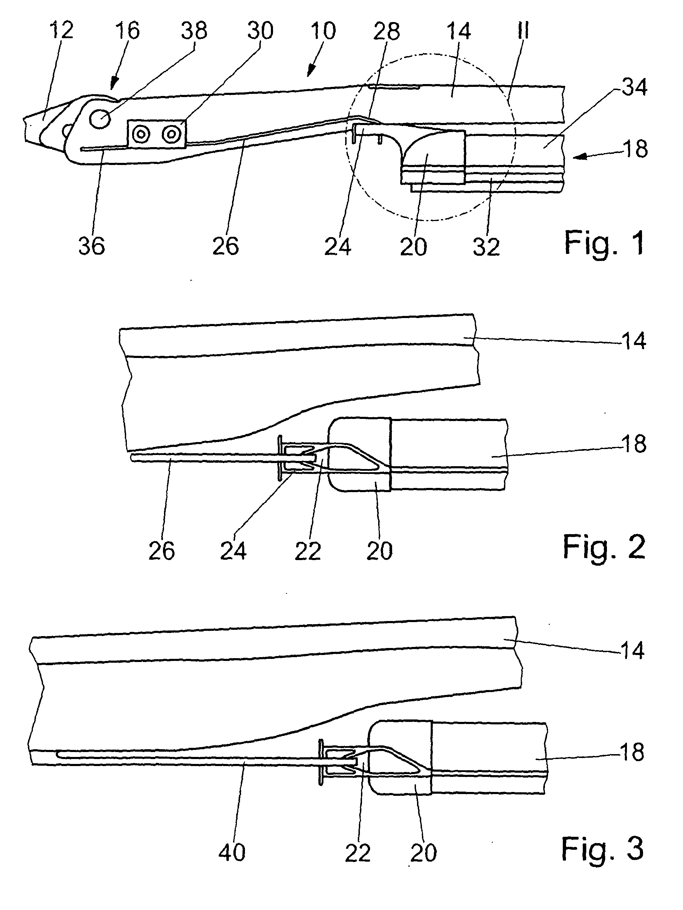

Fig. 3 zeigt ein Ausführungsbeispiel, bei dem die Blattfeder 26 von einer Federzunge 40 gebildet ist, die am Gelenkteil 14 angeformt ist. Dies kann bei Befestigungsteilen 12 aus Blech durch geeignete Stanz- und Biegeverfahren erreicht werden. Bei Befestigungsteilen 12 aus Kunststoff können derartige Federzungen 40 an- bzw. eingespritzt werden.

### Bezugszeichen

- 10: Wischarm
- 12: Befestigungsteil
- 14: Gelenkteil
- 16: Abklappgelenk
- 18: Wischblatt
- 20: Endklipp
- 22: Öse
- 24: zapfenförmiger Ansatz
- 26: Blattfeder
- 28: hakenförmiges Ende
- 30: Halter
- 32: Wischleiste
- 34: Wischleistenträger
- 36: Ende
- 38: Gelenkbolzen
- 40: Federzunge

## Patentansprüche

1. Vorrichtung zum seitlichen Führen eines Wischblatts (18), das einen Wischleistenträger (34) mit einer Wischleiste (32) umfasst, **dadurch gekennzeichnet, dass** sie einen Klipp (20) mit einer Öse (22) aufweist, der auf dem Wischleistenträger (34) und/oder der Wischleiste (32) zu befestigen ist und in dessen Öse (22) eine Blattfeder (26) mit einem hakenförmigen Ende (28) greift, während ihr anderes Ende (36) an einem Teil eines Wischarms (10) zu befestigen ist.

2. Vorrichtung nach Anspruch 1, **dadurch gekennzeichnet, dass** der Klipp ein Endklipp (20) ist und in seinem oberen Bereich einen zapfenförmigen Ansatz (24) mit der Öse (22) besitzt, der in Richtung eines Befestigungsteils (12) weist, wobei die Blattfeder (26) im Bereich eines Abklappgelenks (16) an dem Befestigungsteil (12), einem Gelenkteil (14) oder einem Gelenkbolzen (38) zu befestigen ist.

3. Vorrichtung nach Anspruch 2, **dadurch gekennzeichnet, dass** das Wischblatt (18) seitlich des Gelenkteils (14) verläuft, wobei die Blattfeder (26) außen am Gelenkteil (14) zu befestigen ist.

4. Vorrichtung nach Anspruch 2, **dadurch gekennzeichnet, dass,** das Wischblatt (18) bügelfrei ist und eines seiner Enden weit gehend innerhalb des Gelenkteils (14) verläuft, wobei die Blattfeder (26) innen am Gelenkteil (14) zu befestigen ist.

5. Vorrichtung nach einem der vorhergehenden Ansprüche, **dadurch gekennzeichnet, dass** die Blattfeder (26).von einer Federzunge (40) gebildet ist, die an einem Gelenkteil (14) des Wischarms angeformt ist.

## Claims

1. Lateral guiding device for a wiper blade (18) which comprises a wiper strip carrier (34) with a wiper strip (32), **characterized in that** the device has a clip (20) with an eye (22), which clip is to be fastened on the wiper strip carrier (34) and/or the wiper strip (32) and a leaf spring (26) engages in the eye (22) of the clip by means of a hook-shaped end (28) while its other end (36) is to be fastened to a part of a wiper arm (10).

2. Device according to Claim 1, **characterized in that** the clip is an end clip (20) and, in its upper region, has a pin-shaped extension (24) with the eye (22), which extension points in the direction of a fastening part (12), in which case the leaf spring (26) is to be fastened in the region of a fold-down joint (16) to the fastening part (12), an articulated part (14) or a joint bolt (38).

3. Device according to Claim 2, **characterized in that** the wiper blade (18) runs at the side of the articulated part (14), in which case the leaf spring (26) is to be fastened to the outside of the articulated part (14).

4. Device according to Claim 2, **characterized in that** the wiper blade (18) is free from brackets and one of its ends runs largely within the articulated part (14), in which case the leaf spring (26) is to be fastened on the inside of the articulated part (14).

5. Device according to one of the preceding claims, **characterized in that** the leaf spring (26) is formed by a spring tongue (40) which is integrally formed on an articulated part (14) of the wiper arm.

## Revendications

1. Dispositif de guidage latéral d'un balai d'essuie-glace (18) comprenant un support (34) et une lame d'essuyage (32),
**caractérisé en ce qu'**
il comporte un élément d'enclipsage (20) muni d'un oeillet (22) qui se fixe au support de lame d'essuyage (34) et/ou à la lame d'essuyage (32) et dont l'oeillet (22) reçoit l'extrémité (28) en forme de crochet d'un ressort-lame (26), l'autre extrémité (36) de ce ressort étant fixée à une partie du bras d'essuie-glace (10).

2. Dispositif selon la revendication 1,
**caractérisé en ce que**
le dispositif d'enclipsage est un dispositif d'enclipsage d'extrémité (20) comportant dans sa zone supérieure, un prolongement (24) en forme de téton muni de l'oeillet (22) tourné en direction de la pièce de fixation (12), et
au niveau d'une articulation de rabattement (16) le ressort-lame (26) est fixé à la pièce de fixation (12), à une pièce d'articulation (14) ou à un goujon d'articulation (38).

3. Dispositif selon la revendication 2,
**caractérisé en ce que**
le balai d'essuie-glace (18) passe latéralement à côté de la pièce d'articulation (14), le ressort-lame (26) se fixant extérieurement à la pièce d'articulation (14).

4. Dispositif selon la revendication 2,
**caractérisé en ce que**
le balai d'essuie-glace (18) ne comporte pas de palonnier et l'une de ses extrémités passe très largement à l'intérieur de la pièce d'articulation (14), le ressort-lame (26) se fixant intérieurement à la pièce d'articulation (14).

5. Dispositif selon l'une des revendications précédentes,
**caractérisé en ce que**
le ressort-lame (26) est constitué par une languette élastique (40) formée à une pièce d'articulation (14) du bras d'essuie-glace.
